# EUROPEAN PATENT SPECIFICATION

(11) **EP 2 230 129 B1**
(45) Date of publication and mention of the grant of the patent: **17.10.2012**
(21) Application number: 09171542.5
(22) Date of filing: 28.09.2009
(51) Int. Cl.: B60Q 1/44, B62J 6/16, B62L 3/02, H01H 21/10

(54) **Brake operating device with magnetic brake sensitivity adjustment arrangement for bicycles**
Bremsbetätigungsvorrichtung mit magnetischer Bremsempfindlichkeitseinstellung für Fahrräder
Dispositif de commande de frein avec sensibilité de frein magnétique réglable

(30) Priority: 16.03.2009 TW 98204070 U
(43) Date of publication of application: 22.09.2010
(73) Proprietor: Tektro Technology Corporation, Changhua County (TW)
(72) Inventor: Tsai, Szu-Fang, Sioushuei Township Changhua County (TW)
(74) Representative: Lang, Christian

(56) References cited:
- EP-A2- 1 439 116
- JP-A- 2004 149 006
- JP-U- 58 145 273
- US-A1- 2005 099 277
- US-B1- 6 246 319

## Description

### BACKGROUND OF THE INVENTION

### 1. Field of Invention

The invention relates to bicycle brake and more particularly to a brake operating device having a magnetic type brake sensitivity adjustment arrangement for bicycles (e.g., electric bicycles).

### 2. Description of Related Art

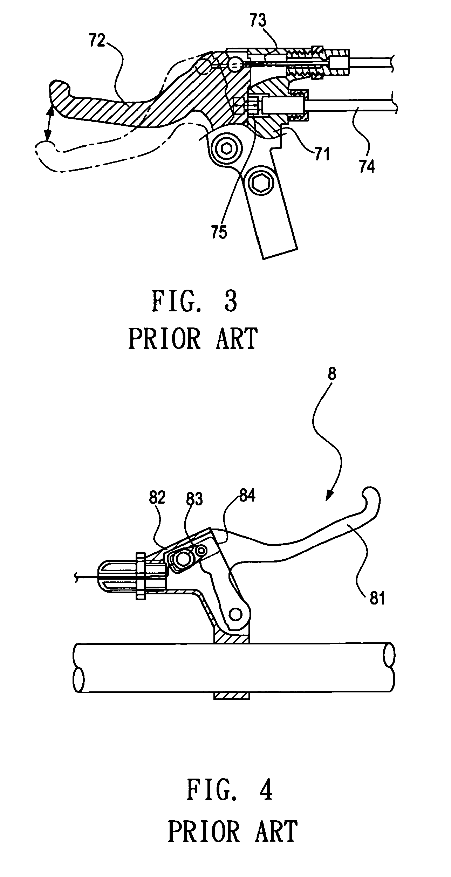

A conventional brake operating device for an electric bicycle is shown in FIG. 3.
The brake operating device comprises a housing 71, a brake lever 72 mounted on the housing 71, a brake cable 73 having one end fastened at the brake lever 72, an operating wire 74 having one end fastened at the housing 71 and being spaced from the brake cable 73, and a contact switch 75 adjacent one end of the operating wire 74.

In a normal pedaling state of the electric bicycle, the brake lever 72 urges the contact switch 75 against the operating wire 74. As a result, the contact switch 75 is closed and the operating wire 74 is deactivated. To the contrary, in response to squeezing the brake lever 72 the contact switch 75 disengages from the brake lever 72 to become open. As a result, the operating wire 74 is activated to pull the brake cable 73 to force brake pads against both sides of the rim of a rotating wheel, thus slowing and stopping the electric bicycle.

Another conventional brake operating device 8 for an electric bicycle is shown in FIG. 4. The device 8 comprises a housing 82 mounted on a handlebar (not numbered), a pivotal brake lever 81 mounted on the housing 82, a magnetic member 83 in the housing 82, and a conductor 84 adjacent the magnetic member 83. A rider may squeeze the brake lever 81 to move the magnetic member 83 relative to the conductor 84 so as to generate a current on the conductor 84 according to Faraday's law of induction. The current can be converted to mechanical energy to brake the electric bicycle.

However, a distance between the magnetic member 83 and the conductor 84 is fixed when the brake lever 81 is not squeezed. Hence, it is impossible of adjusting a brake response time (i.e., brake sensitivity) of a brake lamp if the brake response time is too long or too quick. Thus, the need for improvement still exists.

There have been numerous suggestions in prior patents for brake operating device for bicycles such as U.S. Pat. No. 5,279,179.

US 6,246,319 B1 and US 2005/0099277 A1 disclose brakes including a warning control light. The brakes have a housing and a brake lever pivotably connected to the housing, wherein a conductor is disposed within the housing and a magnet is disposed at the brake lever so that current is induced by pivoting the brake lever in order to activate the warning control light.

JP 2004-149006 A and JP 58-145273 U describe a lever holder assembly, including a housing and a brake lever, the brake lever being pivotably connected to the housing so as to activate a piston disposed within a hydraulic fluid cylinder and to simultaneously activate a switch for activating a control lamp.

EP 1 439 116 A2 describes a hydraulic master cylinder apparatus for a vehicle comprising a housing mounted on a handle bar, a brake lever pivotably secured to the housing, a hydraulic fluid cylinder secured to the housing and a rod disposed in the hydraulic fluid cylinder and connected to a piston within the hydraulic fluid cylinder. The brake lever is configured to move the rod and accordingly the piston within the hydraulic fluid cylinder and includes a lever portion which is configured to activate a lamp switch.

Starting from the latter state of the art it is the object of the present invention to provide an operating device with a reduced leak time for activating a control lamp, in particular with a time for activating a warning lamp which can be adjusted to the user's desires.

### SUMMARY OF THE INVENTION

It is therefore one object of the invention to provide a brake operating device having a magnetic type brake sensitivity adjustment arrangement for bicycles so that an optimum brake sensitivity can be obtained by adjustment when the bicycle is in a non-operating state.

The above and other objects are solved by the brake operating device for a bicycle according to claim 1. Advantageous improvements of the present invention are described by dependent claims.

These and other features and advantages of the invention will become apparent from the following detailed description taken with the accompanying drawings.

### BRIEF DESCRIPTION OF THE DRAWINGS

FIG. 1 is a perspective view in part section of a preferred embodiment of brake operating device for an electric bicycle according to the invention;
FIG. 2 is an exploded view of FIG. 1;
FIG. 3 is a top view in part section of a conventional brake operating device for an electric bicycle; and
FIG. 4 is a top view in part section of another conventional brake operating device for an electric bicycle.

### DETAILED DESCRIPTION OF THE INVENTION

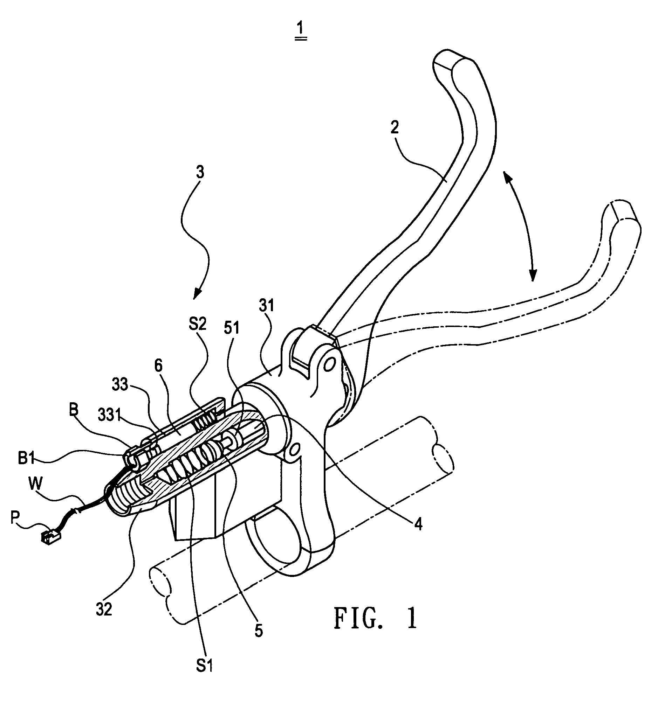

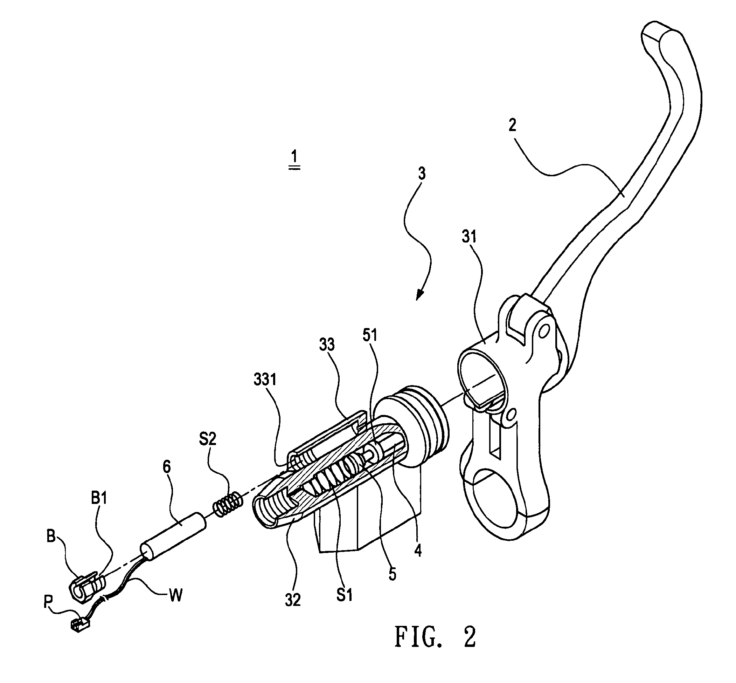

Referring to FIGS. 1 and 2, a brake operating device 1 for an electric bicycle in accordance with a preferred embodiment of the invention comprises the following components as discussed in detail below.

A housing 3 comprises a case 31 mounted on a handlebar (not numbered). A brake lever 2 is pivotably secured to the case 31. The housing 3 further comprises a hollow cylinder 32 secured to the case 31, and a parallel cylindrical member 33 smaller than the cylinder 32 and integrally formed thereon. An opening of the cylindrical member 33 is disposed distal the brake lever 2. An open end of the cylinder 32 (i.e., at left side of the cylinder 32 in FIG. 1) is in communication with a hydraulic fluid reservoir (not shown). Thus, the cylinder 32 is filled with hydraulic fluid.

A rod 4 has one end connected to the brake lever 2 and the other end passes the case 31 to fasten in the cylinder 32.

A magnetic member 5 is a permanent magnet in this embodiment. The magnetic member 5 is mounted in the cylinder 32 and has a plunger 51 interconnecting the magnetic member 5 and the other end of the rod 4. A first helical spring S1 is biased between an internal shoulder (not numbered) of the cylinder 32 (i.e., distal the brake lever 2) and the magnetic member 5.

A cylindrical conductor 6 is slidably mounted in the cylindrical member 33. A second helical spring S2 is biased between the conductor 6 and a blind end of the cylindrical member 33 proximate the brake lever 2. A hollow threaded fastener B is threadedly secured to an internally threaded section 331 of the cylindrical member 33 at its opening so as to urge the conductor 6 against the second helical spring S2. The hollow threaded fastener B has a lengthwise slit B1 to make the hollow threaded fastener B flexible.

An electric wire W has one end connected to the conductor 6 by passing the hollow threaded fastener B and the other end formed as a connector P which is connected to, for example, a brake lamp.

For decreasing a response time of the brake lamp (e.g., time required to turn on the brake lamp) if the brake is too sensitive, a rider may loosen the hollow threaded fastener B so that the energized second helical spring S2 expands to push the conductor 6 toward a direction away from the brake lever 2 (i.e., toward the opening of the cylindrical member 33 or leftward in FIG. 1). The rider may then squeeze the brake lever 2 to pull the rod 4 and thus the magnetic member 5 rightward to test brake sensitivity. A current will be generated on the conductor 6 in response to moving the magnetic member 5 relative to the conductor 6 according to Faraday's law of induction.
But the current generated on the conductor 6 is decreased because they move away from each other in parallel (i.e., less magnetic lines being cut during the movement), resulting in a decrease of brake sensitivity. As an end, the turn-on time of the brake lamp is increased. For example, prior to the adjustment the rider may need to squeeze the brake lever 2 about one third of its full travel angle (e.g., two tenths second is required) to activate the brake lamp. After the adjustment the rider may need to squeeze the brake lever 2 about two thirds of its full travel angle (e.g., four tenths second is required) to activate the brake lamp. Optimum brake sensitivity of the brake lamp can be achieved by doing the loosening operation at least one time. The decreased brake sensitivity can increase safety while riding.

To the contrary, for increasing a response time of the brake lamp if the brake is too insensitive, a rider may tighten the hollow threaded fastener B so as to push the conductor 6 toward the brake lever 2 (i.e., away from the opening of the cylindrical member 33 or rightward in FIG. 1). The rider may then squeeze the brake lever 2 to pull the rod 4 and thus the magnetic member 5 rightward to test brake sensitivity. The current generated on the conductor 6 is increased because they move toward each other in parallel (i.e., more magnetic lines being cut during the movement), resulting in an increase of brake sensitivity. As a result, the turn-on time of the brake lamp is decreased. For example, prior to the adjustment the rider may need to squeeze the brake lever 2 about two thirds of its full travel angle (e.g., four tenths second is required) to activate the brake lamp. After the adjustment the rider may need to squeeze the brake lever 2 about one third of its full travel angle (e.g., two tenths second is required) to activate the brake lamp. Optimum brake sensitivity can be achieved by doing the tightening operation at least one time. The increased brake sensitivity can increase safety while riding.

In addition, at least one second conductor may be provided on the outer surface of the cylinder 32 so as to control, for example, a switch of lamps, on or off of the lamp, or cut-off of fluid line in other embodiments.

While the invention herein disclosed has been described by means of specific embodiments, numerous modifications and variations could be made thereto by those skilled in the art without departing from the scope of the invention set forth in the claims.

## Claims

1. A brake operating device (1) for a bicycle, comprising, in combination:
a housing (3) mounted on a handlebar;
a brake lever (2) pivotably secured to the housing (3);
a hydraulic fluid cylinder (32) secured to the housing (3), the hydraulic fluid cylinder (32) comprising a left portion communicating with a hydraulic fluid reservoir, a right portion, and a shoulder having an axial channel communicating with both the right and left portions;
a rod (4) disposed in the right portion of the hydraulic fluid cylinder (32) and having one end connected to the brake lever (2),
**characterized in that** the brake operating device (1) further includes;
a spring biased magnetic member (5) having one end urged against the shoulder of the hydraulic fluid cylinder (32);
a plunger (51) interconnecting the other end of the magnetic member (5) and the other end of the rod (4);
a parallel cylindrical member (33) formed on the hydraulic fluid cylinder (32) and comprising a hollow threaded fastener (B) at one end,
a spring biased conductor (6) slidably mounted in the cylindrical member (33) and urged by the hollow threaded fastener (B); and
an electric wire (W) having one end connected to the conductor (6) by passing the hollow threaded fastener (B) and the other end formed as a connector (P) adapted to be connected to a predetermined device;
whereby for decreasing a turn-on time of the predetermined device a loosening of the hollow threaded fastener (B) will push the conductor (6) away from the brake lever (2) to decrease a current generated on the conductor (6) due to a movement of the conductor (5) relative to the magnetic member (5); and
whereby for increasing the turn-on time of the predetermined device a tightening of the hollow threaded fastener (B) will push the conductor (6) toward the brake lever (2) to increase a current generated on the conductor (6) due to a movement of the conductor (6) relative to the magnetic member (5).

2. The brake operating device (1) of claim 1, wherein the magnetic member (5) is a permanent magnet.

3. The brake operating device (1) of claim 1, wherein the predetermined device is a brake lamp.

## Patentansprüche

1. Bremsenbetriebsvorrichtung (1) für ein Fahrrad, die in Kombination umfasst:
ein Gehäuse (3), das an einer Griffstange montiert ist,
einen Bremshebel (2), der drehbar an dem Gehäuse (3) befestigt ist,
einen hydraulischen Flüssigkeitszylinder (32), der an dem Gehäuse (3) befestigt ist, wobei der hydraulische Flüssigkeitszylinder (32) einen linken Bereich, der mit einem hydraulischen Flüssigkeitsreservoir in Verbindung steht, einen rechten Bereich und eine Schulter umfasst, die einen axialen Kanal umfasst, der sowohl mit dem linken als auch dem rechten Bereich in Verbindung steht,
eine Stange (4), die in dem rechten Bereich des hydraulischen Flüssigkeitszylinders (32) angeordnet ist und die ein Ende umfasst, das mit dem Bremshebel (2) verbunden ist,
**dadurch gekennzeichnet, dass** die Bremsenbetriebsvorrichtung (1) ferner umfasst:
ein federvorgespanntes magnetisches Element (5), dessen eines Ende gegen die Schulter des hydraulischen Flüssigkeitszylinders (32) vorgespannt ist,
einen Kolben (51), der das andere Ende des magnetischen Elements (5) und das andere Ende des Stabs (4) miteinander verbindet,
ein paralleles zylindrisches Element (33), das auf dem hydraulischen Flüssigkeitszylinder (32) ausgebildet ist und das einen hohlen Gewindeverschluss (B) an einem Ende umfasst,
einen federvorgespannten Leiter (6), der gleitbar in dem zylindrischen Element (33) montiert ist und der durch den hohlen Gewindeverschluss (B) vorgespannt wird, und
ein elektrisches Kabel (B), dessen eines Ende durch Hindurchführen durch den hohlen Gewindeverschluss (B) mit dem Leiter (6) verbunden ist und dessen anderes Ende als ein Leiter (P) ausgebildet ist, der darauf ausgerichtet ist, mit einem vorbestimmten Gerät verbunden zu werden,
wobei zum Verringern einer Anschaltzeit des vorbestimmten Gerätes eine Lockerung des hohlen Gewindeverschlusses (B) den Leiter (6) von dem Bremshebel (2) wegschieben wird, um einen in dem Leiter (6) aufgrund einer Bewegung des Leiters (6) relativ zu dem magnetischen Element (5) erzeugten Strom zu verringern, und
wobei zum Vergrößern der Einschaltzeit eines vorbestimmten Gerätes ein Festziehen des hohlen Gewindeverschlusses (B) den Leiter (6) zu dem Bremshebel (2) hinschieben wird, um einen in dem Leiter (6) aufgrund einer Bewegung des Leiters (6) relativ zu dem magnetischen Elemente (5) erzeugten Strom zu vergrößern.

2. Bremsenbetriebsvorrichtung (1) nach Anspruch 1, bei welcher das magnetische Element (5) ein Permanentmagnet ist.

3. Bremsenbetriebsvorrichtung (1) nach Anspruch 1, bei welcher das vorbestimmte Gerät einen Bremslicht ist.

## Revendications

1. Dispositif de commande de frein (1) pour une bicyclette comprenant, en combinaison :
un bâti (3) monté sur un guidon ;
un levier de frein (2) fixé de manière pivotante au bâti (3) ;
un cylindre de fluide hydraulique (32) fixé au bâti (3), le cylindre de fluide hydraulique (32) comprenant une portion gauche communiquant avec un réservoir de fluide hydraulique, une portion droite et un épaulement ayant un canal axial communiquant à la fois avec la portion droite et la portion gauche ;
une tige (4) placée dans la portion droite du cylindre de fluide hydraulique (32) et ayant une extrémité reliée au levier de frein (2),
**caractérisé en ce que** le dispositif de commande de frein (1) comprend de plus :
un élément magnétique (5) sous la contrainte d'un ressort ayant une extrémité poussée contre l'épaulement du cylindre de fluide hydraulique (32) ;
un piston (51) interconnectant l'autre extrémité de l'élément magnétique (5) et l'autre extrémité de la tige (4) ;
un élément cylindrique parallèle (33) formé sur le cylindre de fluide hydraulique (32) et comprenant une attache filetée creuse (B) à une extrémité,
un conducteur sous la contrainte d'un ressort (6) monté coulissant dans l'élément cylindrique (33) et poussé par l'attache filetée creuse (B) et
un fil électrique (W) ayant une extrémité reliée au conducteur (6) en passant par l'attache filetée creuse (B) et l'autre extrémité formée comme un connecteur (P) adapté pour être relié à un dispositif prédéfini,
cependant que, pour diminuer un temps de mise en circuit du dispositif prédéfini, un desserrement de l'attache filetée creuse (B) poussera le conducteur (6) en l'éloignant du lever de frein (2) pour diminuer un courant généré sur le conducteur (6) dû à un mouvement du conducteur (5) par rapport à l'élément magnétique (5) et
cependant que, pour augmenter un temps de mise en circuit du dispositif prédéfini, un resserrement de l'attache filetée creuse (B) poussera le conducteur (6) vers le levier de frein (2) pour augmenter un courant généré sur le conducteur (6) dû à un mouvement du conducteur (5) par rapport à l'élément magnétique (5).

2. Dispositif de commande de frein (1) selon la revendication 1 dans lequel l'élément magnétique (5) est un aimant permanent.

3. Dispositif de commande de frein (1) selon la revendication 1 dans lequel le dispositif prédéfini est une lampe de frein.
